# DEMANDE DE BREVET EUROPEEN

(11) **EP 1 876 780 A1**
(43) Date de publication de la demande: **09.01.2008**
(21) Numéro de dépôt: 07011751.0
(22) Date de dépôt: 15.06.2007
(51) Int. Cl.: H04L 12/58

(54) **Procédé de communication utilisant le codage d'un questionnaire dans une application IM**

(30) Priorité: 03.07.2006 FR 0652769
(71) Demandeur: Alcatel Lucent, 75008 Paris (FR)
(72) Inventeur: Pfleger, Nicolas, 67000 Strasbourg (FR)
(74) Mandataire: Hedarchet, Stéphane

(57) **Abrégé**

L'invention concerne un procédé de communication entre au moins un premier et un deuxième terminal par l'intermédiaire d'une application de type conversation instantanée IM, ledit procédé comprenant les étapes prévoyant :
- le codage, par l'application IM du premier terminal, d'un message contenant un questionnaire ;
- l'envoi dudit message codé depuis le premier terminal au deuxième terminal ;
- le décodage du message par l'application IM du deuxième terminal de sorte à générer le questionnaire correspondant audit message codé ;
- l'affichage dudit questionnaire par le deuxième terminal.

L'invention concerne également une application IM qui permet notamment de mettre en oeuvre ce procédé de communication.

## Description

L'invention concerne un procédé de communication entre au moins un premier et un deuxième terminal par l'intermédiaire d'une application de type conversation instantanée IM ainsi qu'une application IM qui permet notamment de mettre en oeuvre ce procédé de communication.

L'invention s'applique en particulier mais non exclusivement à une communication entre au moins un terminal d'un centre d'appels (Call Center en anglais) et un terminal d'un client dudit centre d'appels.

De façon connue, un centre d'appels est un système qui permet de mettre en communication un client avec des services du titulaire dudit centre, afin notamment d'assurer une assistance en ligne sur un produit ou un service acquis par ledit client.

Pour ce faire, il est notamment connu d'utiliser une communication téléphonique vocale entre le centre d'appels et le client. En particulier, un système de communication de type « réponse automatique personnalisable » (IVR pour Interactive Voice Response en anglais) peut être utilisé pour assurer une telle communication.

La technologie IVR permet une interaction entre un téléphone et une base de données afin d'obtenir des informations ou de générer des actions en pressant des touches du téléphone. Un centre d'appels IVR peut donc diffuser à un client des questions préenregistrées auxquelles il répond en pressant la touche correspondante de son téléphone. Ainsi, les réponses apportées aux questions permettent notamment d'identifier et de savoir les motifs de l'appel du client, de sorte à le diriger in fine vers le service ou l'opérateur le plus amène de lui répondre.

Il apparaît toutefois que la technologie IVR ne présente pas la convivialité qu'un client est en droit d'attendre d'un service proposé par son fournisseur.

Pour afficher des questions et recevoir des réponses, on pourrait utiliser une application de type Web. En effet, les informations étant écrites plutôt que vocales, la convivialité s'en trouve améliorée. Toutefois, ce type d'application, contrairement aux technologies utilisées pour les centres d'appels, n'est pas une application de communication dans le sens ou il n'est notamment pas possible de facilement collecter les informations et de les transférer à un opérateur. En effet, les applications Web ne sont pas agencées pour supporter une communication, mais uniquement pour afficher des pages d'informations.

On connaît par ailleurs des applications de type conversation instantanée (IM pour Instant Messaging en anglais) par l'intermédiaire desquelles au moins deux terminaux peuvent communiquer des messages écrits. Un grand nombre d'applications IM sont connues parmi lesquelles on peut citer MSN Messenger, AOL AIM, Skype, Google talk, Yahoo!Messenger et Gaim. Typiquement, ces applications permettent, au niveau d'un terminal, l'édition de texte libre dans au moins une fenêtre, l'envoi des messages à au moins un autre terminal ainsi que l'affichage des messages reçus depuis au moins un autre terminal. Ce type d'applications connaît un succès grandissant en tant que moyen de communication grâce à leur convivialité d'utilisation.

Toutefois, du fait de la liberté laissée dans l'écriture du texte des messages transmis, la communication par l'intermédiaire d'une application IM ne permet pas son utilisation entre un client et un centre d'appels. En effet, pour identifier la requête du client et le guider vers le service ou l'opérateur adéquat, il est nécessaire d'apporter des réponses précises et non ambigües aux questions posées. Or, avec du texte libre, cette condition ne peut pas être remplie de façon fiable pour tous les clients, en particulier du fait de la pluralité de syntaxes ou d'orthographes possibles en réponse à une même question.

L'invention a pour but de pallier les inconvénients de l'art antérieur en proposant notamment un procédé de communication entre deux terminaux qui présente une fiabilité et une convivialité améliorées, de sorte à pouvoir être notamment mis en oeuvre pour la communication entre le terminal d'un client et celui d'un centre d'appels.

A cet effet, l'invention propose un procédé de communication entre au moins un premier et un deuxième terminal par l'intermédiaire d'une application de type conversation instantanée IM, ledit procédé comprenant les étapes prévoyant :
- le codage, par l'application IM du premier terminal, d'un message contenant un questionnaire ;
- l'envoi dudit message codé depuis le premier terminal au deuxième terminal ;
- le décodage du message par l'application IM du deuxième terminal de sorte à générer le questionnaire correspondant audit message codé ;
- l'affichage dudit questionnaire par le deuxième terminal.

Ainsi, le procédé selon l'invention permet de combiner la convivialité dans la communication d'informations écrites au moyen d'une application IM, avec la fiabilité apportée par l'intégration d'un questionnaire dans ces informations.

Selon un deuxième aspect, l'invention propose une application IM qui comprend des moyens permettant, entre au moins deux terminaux, de communiquer un questionnaire ainsi que la réponse apportée. Pour ce faire, l'application IM comprend des moyens de décodage des messages reçus et des moyens de codage des messages envoyés, lesdits moyens de codage étant apte à inclure un questionnaire dans un message, et lesdits moyens de décodage étant aptes à générer le questionnaire à partir d'un message codé.

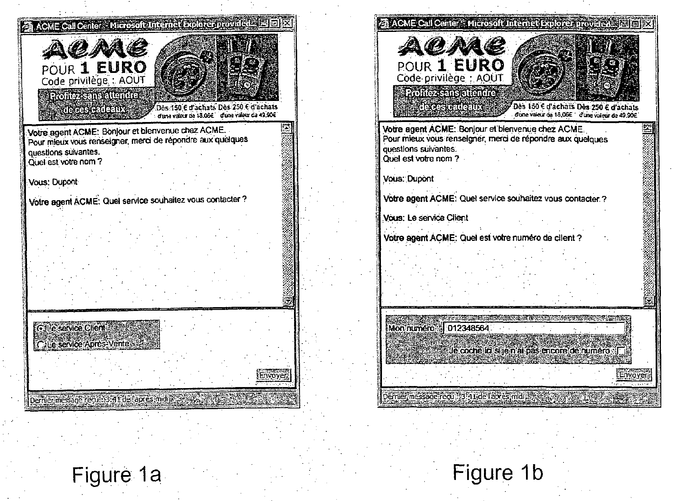

D'autres particularités et avantages de l'invention apparaîtront dans la description qui suit de différents modes de réalisation particuliers, description faite en relation avec la figure jointe qui montre, selon un mode de réalisation, l'affichage d'un terminal dont l'application IM à reçu un message (figure 1 a) et l'affichage du terminal après que l'application IM ait envoyée la réponse au message précédent et ait reçue une autre question (figure 1 b).

En relation avec les figures, on décrit ci-dessous un mode de réalisation d'un procédé de communication selon l'invention entre un premier terminal d'un centre d'appels et un deuxième terminal d'un client. Dans cette application, les premiers échanges entre le client et le centre d'appels se font classiquement sans l'intervention d'un agent. Par conséquent, le premier terminal n'est pas forcément un appareil physique, mais peut être uniquement une application. Toutefois, dans le cadre de la présentation de l'invention, cette application est également qualifiée de terminal puisqu'elle peut émettre et recevoir sans toutefois gérer d'affichage.

De façon connue, ces terminaux peuvent être intégrés dans un réseau de communication, par exemple de type télécommunication mobile ou filaire, ou encore dans un réseau Internet. Toutefois, l'invention n'est nullement limitée à un mode de communication particulier, ni à une application spécifique dans la communication entre les terminaux.

Le procédé prévoit que la communication entre les terminaux soit réalisée par l'intermédiaire d'une application de type conversation instantanée (ci-après dénommée application IM pour Instant Messaging en anglais). Une application IM permet la communication écrite entre au moins deux terminaux connectés entre eux dans un réseau. A cet effet, une application IM assure l'édition de messages dans au moins une fenêtre, l'envoi des messages à au moins un autre terminal ainsi que l'affichage des messages reçus depuis au moins un autre terminal. L'utilisation des applications IM comme mode de communication connaît un grand succès, notamment du fait de leur grande simplicité d'utilisation ainsi que de la convivialité qu'elles apportent.

En particulier, le procédé permet la communication par l'intermédiaire de l'application IM d'un questionnaire entre les terminaux. L'utilisation d'un questionnaire est avantageuse dans le cadre de la communication envisagée en ce qu'elle permet de limiter le nombre de réponses possibles, ce qui contribue à la fiabilisation du service rendu par le centre d'appels. En particulier, le questionnaire peut être de type fermé, c'est-à-dire ne permettant que la sélection de l'une des réponses affichées dans le questionnaire.

Pour permettre la communication d'un questionnaire par l'intermédiaire de l'application IM, l'invention propose que l'application IM du premier terminal code un message contenant ledit questionnaire.

Selon un mode de réalisation, le codage du message peut utiliser le langage HTML. Toutefois, d'autres langages peuvent être utilisés pour afficher un questionnaire, en particulier un questionnaire permettant de réduire les réponses à un certain de nombres de possibilités. Parmi ceux-ci, on peut citer les technologies ASP, JSP, ActivX, Javascript et PHP. La façon dont le questionnaire est écrit n'est pas une limitation de l'invention, puisqu'elle dépend de la nature du langage utilisé.

On donne ci-dessous, un exemple de message codé par l'application IM en utilisant le langage. HTML, ledit message étant envoyé par l'application IM à travers un réseau utilisant un protocole SIP (pour Session Initiation Protocol en anglais).

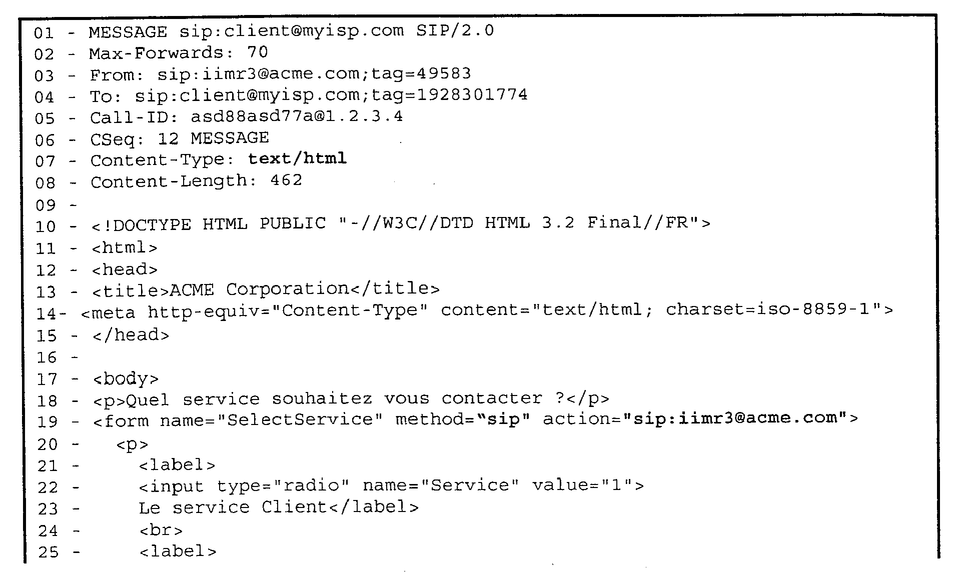

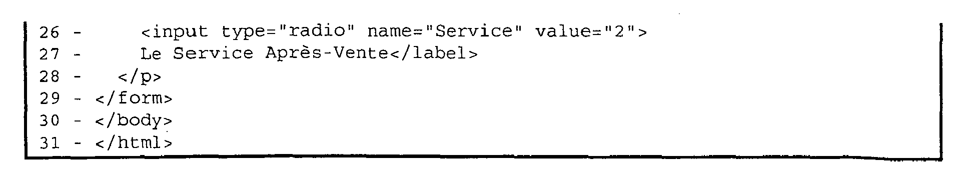

Les lignes à 01 à 09 contiennent la description SIP d'un message IM standard. La ligne 07 permet, par introduction d'un libellé spécifique dans le message, à l'application IM recevant ce message de savoir que la partie de texte du message n'est pas un texte standard mais est au format HTML. Les lignes 10 à 31 sont écrites en langage HTML pour permettre l'affichage du questionnaire dans la forme spécifier en ligne 19. Par ailleurs, la ligne 19 spécifie l'adresse URL à laquelle le message doit être envoyé.

Ainsi, après envoi du message codé depuis le premier terminal au deuxième terminal, l'application IM de ce dernier décode le message de sorte à générer le questionnaire en utilisant un traducteur de langage HTML. L'application IM peut alors afficher le questionnaire, comme cela est représenté sur la figure 1 a.

Sur cette figure, l'application IM du deuxième terminal est prévue pour générer une fenêtre d'affichage et une fenêtre d'écriture dans laquelle l'utilisateur d'une application IM est habitué à rentre le texte de ses messages. La question (« Quel service souhaitez-vous contacter ? ») est disposée dans la fenêtre d'affichage alors que les réponses possibles (« Le service Client », « Le service Après-Vente ») sont cochables dans la fenêtre d'écriture. En variante non représentée, on peut prévoir d'autres formes de questionnaire, y compris des questionnaires permettant de répondre en inscrivant au moins une partie de texte libre dans la fenêtre d'écriture.

Selon une réalisation, le procédé prévoit en outre que l'application IM du deuxième terminal code la réponse au questionnaire, ladite réponse étant communiquée au premier terminal pour être décodée par son application IM de façon analogue à celle présentée ci-dessus.

On donne ci-dessous, un exemple de message codé comprenant la réponse au questionnaire présenté sur la figure 1 a.

| | |
|---|---|
| 01 - | MESSAGE sip:iimr3@acme.com SIP/2.0 |
| 02 - | Max-Forwards: 70 |
| 03 - | From: sip:client:@myisp.com;tag=1928301774 |
| 04 - | To: sip:iimr3@acme.com;tag=49583 |
| 05 - | Call-ID: asd88asd77a@1.2.3.4 |
| 06 - | CSeq: 13 MESSAGE |
| 07 - | Content-Type: application/x-www-form-urlencoded |
| 08 - | Content-Length: 18 |
| 09 - | |
| 10 - | Service=1 |

Les lignes à 01 à 09 contiennent la description SIP d'un message IM standard. La ligne 07 permet à l'application IM recevant ce message de savoir que la partie de texte du message n'est pas un texte standard mais est au format HTML. La ligne 10 comprend la réponse au questionnaire (« Le Service Client ») au format HTML.

En variante, l'invention prévoit un procédé de communication dans lequel au moins un autre terminal est connecté à l'application IM, la réponse au questionnaire étant codée par le deuxième terminal de sorte à contenir une information relative au terminal auquel la réponse doit être envoyée. Ainsi, le procédé permet à l'application IM d'envoyer le message codé au terminal concerné.

La figure 1 b est la représentation de l'affichage du deuxième terminal, lorsque le procédé prévoit de lui envoyer plusieurs messages successivement, le questionnaire du message codé étant généré en fonction de la réponse apportée au questionnaire correspondant au message codé précédent.

Sur la figure 1 b, la question ultérieure est « Quel est votre numéro de client ? ». La fenêtre d'écriture comprend un champ libre permettant de saisir le numéro correspondant ainsi qu'une zone cochable en tant que réponse alternative. Par ailleurs, sur cette figure, le procédé prévoit qu'au moins une partie de l'historique des réponses soit affiché dans la fenêtre d'affichage. En particulier, l'affichage peut être réalisé sous format texte standard, comme l'utilisateur d'une application IM est habitué à le voir. Pour ce faire, le procédé prévoit d'utiliser l'intitulé du lien HTML de la réponse cochée.

Selon un deuxième aspect, l'invention propose une application IM qui permet en particulier de mettre en oeuvre le procédé décrit ci-dessus en étant installé sur chacun des terminaux devant communiqués entre eux. Pour ce faire, l'invention prévoit d'adapter une application IM de sorte qu'elle comprenne des moyens de décodage des messages reçus et des moyens de codage des messages envoyés. Les moyens de codage sont aptes à inclure un questionnaire dans un message de type IM, et les moyens de décodage étant aptes à générer le questionnaire à partir d'un message codé.

En outre, les moyens de codage peuvent être aptes à coder la réponse apportée à un questionnaire et/ou être agencés pour introduire un libellé spécifique dans le message, les moyens de décodage étant aptes à interpréter ledit libellé.

Selon une réalisation, les moyens de codage inclus des informations en langage HTML dans le message, les moyens de décodage interprétant le langage HTML de sorte à générer le questionnaire.

L'invention telle que décrite ci-dessus permet d'utiliser une unique application de communication, d'ergonomie conviviale et connue d'un grand nombre d'utilisateurs. En particulier, l'utilisateur n'a ainsi pas à jongler entre une application de type Web et avec une application distincte de communication. En outre, les avantages d'une application IM sont conservés par l'invention, en particulier concernant la possibilité pour chacun des intervenants de consulter l'historique de la communication ainsi que relativement à la possibilité de conserver ledit historique. Par ailleurs, la possibilité de pouvoir, de façon simple, faire intervenir d'autres terminaux dans la communication est également particulièrement appréciable.

## Revendications

1. Procédé de communication entre au moins un premier et un deuxième terminal par l'intermédiaire d'une application de type conversation instantanée IM, ledit procédé comprenant les étapes prévoyant :
- le codage, par l'application IM du premier terminal, d'un message contenant un questionnaire ;
- l'envoi dudit message codé depuis le premier terminal au deuxième terminal ;
- le décodage du message par l'application IM du deuxième terminal de sorte à générer le questionnaire correspondant audit message codé ;
- l'affichage dudit questionnaire par le deuxième terminal.

2. Procédé de communication selon la revendication 1, dans lequel la réponse au questionnaire est codée par l'application IM du deuxième terminal, ladite réponse étant communiquée au premier terminal pour être décodée par son application IM.

3. Procédé de communication selon la revendication 1, dans lequel au moins un autre terminal est connecté à l'application IM, la réponse au questionnaire étant codée par le deuxième terminal de sorte à contenir une information relative au terminal auquel ladite réponse doit être envoyée, ledit procédé prévoyant que l'application IM envoie ladite réponse au terminal concerné.

4. Procédé de communication selon la revendication 2 ou 3, dans lequel plusieurs messages sont envoyés successivement au deuxième terminal, le questionnaire du message codé étant généré en fonction de la réponse apportée au questionnaire correspondant au message codé précédent.

5. Procédé de communication selon la revendication 4, dans lequel au moins une partie de l'historique des réponses est affichée dans une fenêtre d'affichage du deuxième terminal.

6. Procédé de communication selon l'une quelconque des revendications 1 à 5, dans lequel le questionnaire est de type fermé.

7. Procédé de communication selon l'une quelconque des revendications 1 à 6, dans lequel le questionnaire est affiché dans une fenêtre d'écriture du deuxième terminal.

8. Procédé de communication selon l'une quelconque des revendications 1 à 7, dans lequel le message et/ou la réponse sont codés en utilisant le langage HTML.

9. Application de type conversation instantanée IM, ladite application comprenant des moyens de décodage des messages reçus et des moyens de codage des messages envoyés, lesdits moyens de codage étant apte à inclure un questionnaire dans un message, et lesdits moyens de décodage étant aptes à générer le questionnaire à partir d'un message codé.

10. Application IM selon la revendication 9, dans laquelle les moyens de codage sont aptes à coder la réponse apportée à un questionnaire.

11. Application IM selon la revendication 9 ou 10, dans laquelle les moyens de codage sont agencés pour introduire un libellé spécifique dans le message, les moyens de décodage étant aptes à interpréter ledit libellé.

12. Application IM selon l'une quelconque des revendications 9 à 11, dans laquelle les moyens de codage inclus des informations en langage HTML dans le message, les moyens de décodage interprétant le langage HTML de sorte à générer le questionnaire.
